# EUROPÄISCHE PATENTSCHRIFT

(11) **EP 2 138 690 B1**
(45) Veröffentlichungstag und Bekanntmachung des Hinweises auf die Patenterteilung: **12.03.2014**
(21) Anmeldenummer: 09161940.3
(22) Anmeldetag: 04.06.2009
(51) Int. Cl.: F02D 9/10, F16H 55/08

(54) **Aktuator**
Actuator
Actuateur

(30) Priorität: 24.06.2008 DE 102008030004
(43) Veröffentlichungstag der Anmeldung: 30.12.2009
(73) Patentinhaber: Mahle International GmbH, 70376 Stuttgart (DE)
(72) Erfinder: Skufca, Ivan, 74074 Heilbronn (DE); Weber, Thomas, 73650 Winterbach (DE)
(74) Vertreter: BRP Renaud & Partner

(56) Entgegenhaltungen:
- GB-A- 2 400 157
- US-A- 4 308 760
- US-A1- 2004 012 282
- US-A1- 2005 130 785
- US-A1- 2005 211 220
- US-A1- 2006 053 917
- US-A1- 2007 199 541

## Beschreibung

Die vorliegende Erfindung betrifft eine Stelleinrichtung, insbesondere eines Kraftfahrzeugs, mit einem Aktuator, der einen Elektromotor zum drehenden Antreiben einer Abtriebswelle des Aktuators aufweist.

Stelleinrichtungen dieser Art können bei Fahrzeugen beispielsweise als Klappenstelleinrichtungen zum Einsatz kommen, bei denen zumindest ein Stellglied eine Klappe ist, mit der ein durchströmbarer Querschnitt in einer Gas führenden Leitung des Fahrzeugs steuerbar ist. Eine derartige Klappenstelleinrichtung kann beispielsweise in einem Frischgastrakt oder in einem Abgastrakt einer Brennkraftmaschine oder einer Brennstoffzelle des Fahrzeugs zur Anwendung kommen. Ebenso sind Stelleinrichtungen zum Verstellen einer Leitschaufelgeometrie bei einer Turbine eines Abgasturboladers bekannt. Ferner kann auch ein sogenanntes "Waste-Gate" eines Abgasturboladers mittels einer solchen Stelleinrichtung betätigt werden.

Aus der US 2007 / 0 199 541 A1 ist eine Drosselklappenanordnung bekannt, bei welcher eine Drosselklappe mittels eines Elektromotors über einen Triebstrang angetrieben ist. Eine Rotorwelle des Elektromotors trägt eine Schnecke des Triebstrangs. Im Triebstrang steht die Schnecke mit einem Schneckenrad in Eingriff. Das Schneckenrad ist drehfest mit einem ersten Kegelrad verbunden, das mit einem zweiten Kegelrad in Eingriff steht. Das zweite Kegelrad ist nun mit ener Antriebswelle drehfest verbunden, welche die Drosselklappe trägt.

Eine weitere Drosselklappenanordnung ist aus der GB 2 400157 A bekannt, bei welcher wieder ein Elektromotor über ein Schneckengetriebe eine die Drosselklappe tragende Antriebswelle antreibt. Die Schnecke und das Schneckenrad des Schneckengetriebes sind dabei aus Kunststoff hergestellt.

Aus der US 2005 / 0 130 785 A1 ist ein Kegelgetriebe für ein Differentialgetriebe eines Fahrzeugtriebstrangs bekannt, bei dem zwei Kegelräder miteinander in Eingriff stehen. Die Kegelräder besitzen Zähne, die so profiliert sind, dass sie von einem Fußbereich bis zu einer Spitze nach außen hinterschnittfrei gewölbt sind.

Aus der US 4 308 760 sind Zahnräder bekannt, deren Zähne in einem Axialschnitt der Verzahnung einen Fußbereich besitzen, der sich von einem ersten axialen Ende der Verzahnung bis zu einem zweiten axialen Ende der Verzahnung nach außen konkav gewölbt erstreckt.

Aus der US 2004 / 0 012 282 A1 und aus der US 2006 / 0 053 917 A1 sind Getriebe bekannt, bei denen ineinandergreifende Zahnräder aus Kunststoff hergestellt sind.

Die vorliegende Erfindung beschäftigt sich mit dem Problem, für einen Aktuator der eingangs genannten Art bzw. für einen damit ausgestatteten Stellantrieb eine verbesserte Ausführungsform anzugeben, die sich insbesondere dadurch auszeichnet, dass sie kompakt baut und/oder vergleichsweise große Stellkräfte bzw. Stellmomente erzeugen kann und/oder eine vereinfachte Montage ermöglicht.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, bei einer Stelleinrichtung eine Abtriebswelle eines Aktuators über ein Kegelgetriebe oder Kegelradgetriebe mit einer Betätigungswelle zum Betätigen wenigstens eines Stellglieds der Stelleinrichtung zu koppeln. Die Verwendung eines Kegelgetriebes ermöglicht Ein bausituationen, bei denen zwischen einer Rotationsachse der Abtriebswelle des Aktuators und einer Rotationsachse der Betätigungswelle ein Winkel von einschließlich 60° bis einschließlich 120° vorliegt, der insbesondere auch bei etwa 90° liegen kann. Diese Bauweise eröffnet zusätzliche Anwendungsgebiete für die Stelleinrichtung, insbesondere bei beengten Einbausituationen.

Erfindungsgemäß weist zumindest eines der Kegelräder des Kegelradgetriebes Zahnflanken auf, die nach außen gewölbt bzw. konvex geformt sind, derart, dass die jeweilige Zahnflanke eine Wölbung besitzt, die von einem axialen Ende zum anderen axialen Ende des jeweiligen Zahns zunächst zunimmt und danach wieder abnimmt. Derart gewölbte oder konvexe Zahnflanken ermöglichen eine punktförmige Kontaktierung im Bereich der Zahnflanken der beiden miteinander in Eingriff stehenden Kegelräder. Gegenüber einer herkömmlichen Bauweise mit radial geradlinigen Zahnflanken, die eine linienförmige Kontaktierung der Zahnflanken im Eingriffsbereich ermöglichen, kann das hier vorgestellte Kegelgetriebe bei gleichem Teilkreisdurchmesser zwar nur reduzierte Kräfte bzw. Drehmomente übertragen, bietet jedoch die Möglichkeit, die Kegelräder innerhalb des Kegelgetriebes weniger genau relativ zueinander ausrichten zu müssen, um einen ordnungsgemäßen Betrieb gewährleisten zu können. Die vorgeschlagene Bauweise mit gewölbten oder konvexen Zahnflanken ermöglicht es somit, die Kegelräder vergleichsweise ungenau montieren zu können, also mit vergleichsweise großen Lagetoleranzen auszustatten. Insbesondere müssen sich die Rotationsachsen der Abtriebswelle und der Betätigungswelle nicht in einem Schnittpunkt schneiden, sondern können beabstandet aneinander vorbeilaufen. Des Weiteren muss der Winkel zwischen den Rotationsachsen der Abtriebswelle und der Betätigungswelle nicht exakt mit dem Winkel übereinstimmen, für den die Kegelräder an sich ausgelegt sind. Die vorgeschlagene Formgebung für die Zahnflanken der Kegelräder toleriert somit vergleichsweise große Lageabweichungen. Hierdurch wird die Herstellung der Stelleinrichtung erheblich vereinfacht und kostengünstig.

Erfindungsgemäß ist ferner vorgesehen, dass das jeweilige Kegelrad aus Kunststoff spritzgeformt ist, dass Zähne der Kegelräder so profiliert sind, dass sie von einem Fußbereich des jeweiligen Zahns bis zu einer Spitze des jeweiligen Zahns hinterschnittfrei geformt sind, und dass die Kegelräder als endgeformte, insbesondere werkzeugfallende, Spritzgussteile konzipiert sind, wodurch sich die kegelräder besonders preiswert herstellen lassen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine perspektivische Ansicht einer Stelleinrichtung,
- Fig. 2: eine perspektivische, teilweise geschnittene Ansicht eines Aktuators,
- Fig. 3: einen Längsschnitt durch ein Getriebe des Aktuators,
- Fig. 4: eine perspektivische Ansicht des teilweise geschnittenen Aktuators in auseinander gezogener Darstellung,
- Fig. 5: eine perspektivische, teilweise geschnittene Ansicht des Aktuators,
- Fig. 6: eine perspektivische Ansicht des Getriebes des Aktuators in einer auseinander gezogenen Darstellung bei einer anderen Ausführungsform,
- Fig. 7: eine perspektivische, teilweise geschnittene Ansicht des Aktuators aus Fig. 6,
- Fig. 8: eine perspektivische, teilweise geschnittene Ansicht des Aktuators im Bereich eines Elektromotors, bei verschlossener Einführöffnung,
- Fig. 9: eine perspektivische Ansicht des Aktuators aus Fig. 8 in einer auseinander gezogenen Darstellung,
- Fig. 10: eine perspektivische Ansicht eines Kegelgetriebes,
- Fig. 11: eine Draufsicht des Kegelgetriebes,
- Fig. 12: eine Schnittansicht des Kegelgetriebes,
- Fig. 13: eine vergrößerte Ansicht eines Kegelrads des Kegelgetriebes,
- Fig. 14: ein vergrößerter Ausschnitt XIV des Kegelrads aus Fig. 13, und
- Fig. 15: eine vergrößerte Draufsicht auf einen Zahn des Kegelrads entsprechend einer Blickrichtung XV in Fig. 14.

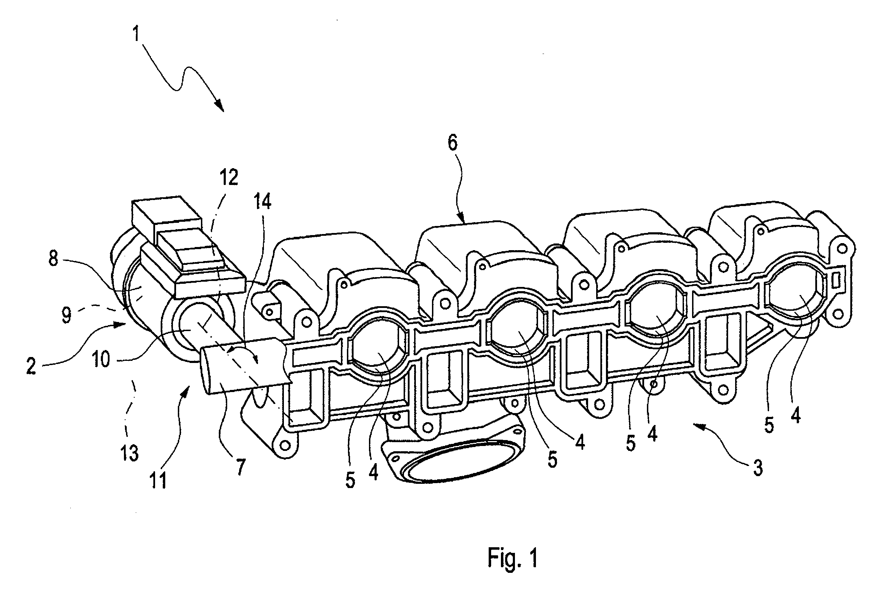

Entsprechend Fig. 1 umfasst eine Stelleinrichtung 1, die insbesondere fest in einem Kraftfahrzeug eingebaut sein kann, einen Aktuator 2 sowie eine Stellgliedanordnung 3. Im Beispiel besitzt die Stellgliedanordnung 3 mehrere, hier vier Stellglieder 4, die exemplarisch als Klappen ausgestaltet sind. Dementsprechend handelt es sich bei der Verstelleinrichtung 1 exemplarisch um eine Klappenstelleinrichtung. Dabei dient das jeweilige Stellglied 4, also die jeweilige Klappe 4 zum Steuern eines durchströmbaren Querschnitts in einer durchströmbaren Leitung 5, und zwar bevorzugt in einem Fahrzeug. Beispielsweise ist die Stelleinrichtung 1 in einem Frischgastrakt einer Brennkraftmaschine eines Fahrzeugs angeordnet und kann dort als Tumbleklappe und/oder als Drallklappe ausgestaltet sein. Im Beispiel ist die Stelleinrichtung 1 in ein Saugmodul 6 integriert, mit dem Frischgas auf die einzelnen Brennräume einer Brennkraftmaschine verteilt wird. Ebenso ist es grundsätzlich möglich, die Stelleinrichtung 1 z.B. bei einem Brennstoffzellensystem beispielsweise zum Steuern des Anodengases oder des Kathodengases oder des Abgases zu verwenden.

Die Stelleinrichtung 1 umfasst eine Betätigungswelle 7, mit deren Hilfe die Stellglieder 4 betätigbar sind. Hierzu ist die Betätigungswelle 7 um ihre Längsmittelachse drehend antreibbar, während die Stellglieder 4 mehr oder weniger drehfest mit der Betätigungswelle 7 verbunden sind.

Der Aktuator 2 besitzt ein Gehäuse 8, in dem ein Elektromotor 9 angeordnet ist. Mit dem Elektromotor 9 ist eine Abtriebswelle 10 des Aktuators 2 drehend antreibbar. Dabei dreht die Antriebswelle 10 um ihre Längsmittelachse. Zur Drehmomentübertragung zwischen der Abtriebswelle 10 und der Betätigungswelle 7 ist ein Kegelgetriebe 11 vorgesehen. Die Abtriebswelle 10 und die Betätigungswelle 7 sind relativ zueinander so orientiert, dass zwischen einer Rotationsachse 12 der Abtriebswelle 10 und einer Rotationsachse 13 der Betätigungswelle 7 ein Winkel 14 vorliegt, der in einem Bereich von einschließlich 60° bis einschließlich 120° liegt und der im gezeigten, bevorzugten Ausführungsbeispiel bei etwa 90° liegt.

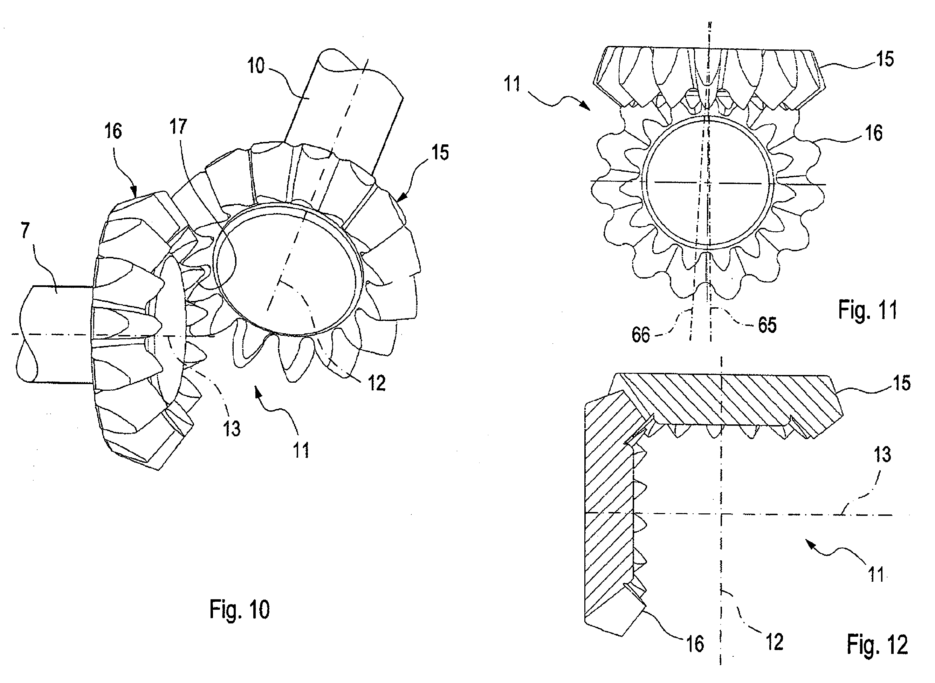

Entsprechend Fig. 10 umfasst das Kegelgetriebe 11 zwei Kegelräder, nämlich ein erstes Kegelrad 15 und ein zweites Kegelrad 16, die in einem Eingriffsbereich 17 miteinander in Eingriff stehen, um die gewünschte Drehmomentübertragung zwischen den Kegelrädern 15, 16 zu realisieren. Das erste Kegelrad 15 ist mit der Abtriebswelle 10 fest verbunden und ist bezüglich der Rotationsachse 12 der Abtriebswelle 10 koaxial angeordnet. Auf entsprechende Weise ist das zweite Kegelrad 16 drehfest mit der Betätigungswelle 7 verbunden und koaxial zur Rotationsachse 13 der Betätigungswelle 7 orientiert. Die drehfeste Kopplung zwischen dem jeweiligen Kegelrad 15, 16 und der jeweiligen Welle 7, 10 kann beispielsweise durch einen Presssitz und/oder durch Formschluss realisiert werden. Ebenso können die Kegelräder 15, 16 mit den Wellen 7, 10 verschweißt und/oder verklebt und/oder verschraubt werden.

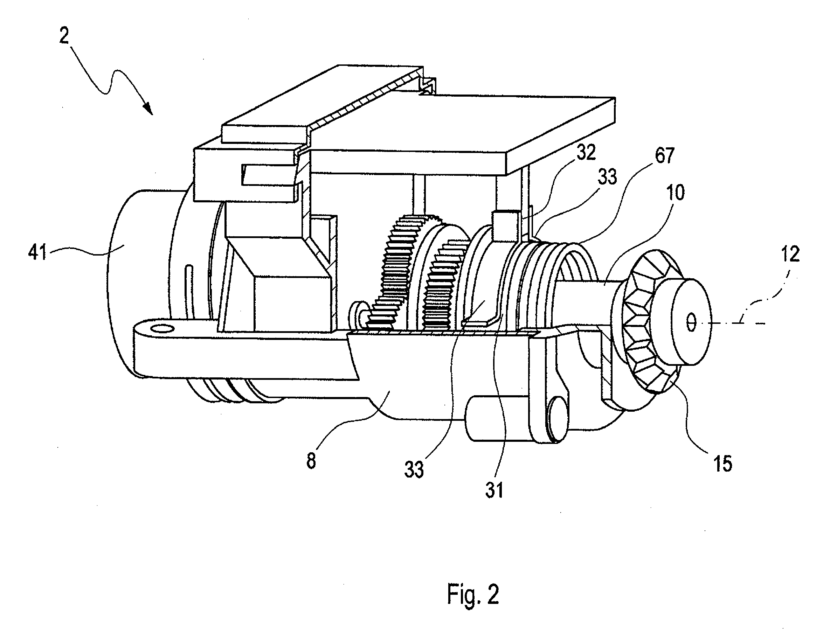

Entsprechend den Fig. 2 bis 7 besitzt der Elektromotor 9 eine drehend antreibbare Antriebswelle 18, die hinsichtlich ihrer Rotationsachse zweckmäßig koaxial zur Rotationsachse 12 der Abtriebswelle 10 orientiert ist. Der Aktuator 2 enthält in seinem Gehäuse 8 ein Planetengetriebe 19. Über dieses Planetengetriebe 19 ist die Antriebswelle 18 mit der Abtriebswelle 10 antriebsverbunden. Das Planetengetriebe 19 besitzt zumindest eine Getriebestufe 20 bzw. 21. Im Beispiel sind genau zwei solche Getriebestufen 20, 21 vorgesehen. Es ist klar, dass bei anderen Ausführungsformen auch nur eine oder drei oder mehr derartige Getriebestufen 20, 21 vorgesehen sein können.

Jede Getriebestufe 20, 21 besitzt ein Sonnenrad 22 bzw. 23 sowie wenigstens zwei Planetenräder 24. Im Beispiel weist jede Getriebestufe 20, 21 drei Planetenräder 24 auf. Das jeweilige Sonnenrad 22, 23 steht mit den zugehörigen Planetenrädern 24 in Eingriff. Die Planetenräder 24 sind jeweils an einem Planetenradträger 25 drehbar gelagert und stehen außerdem mit einem Hohlrad 26 in Eingriff. Dabei ist für beide Getriebestufen 20, 21 hier ein gemeinsames Hohlrad 26 vorgesehen, mit dem alle Planetenräder 24 der beiden Getriebestufen 20, 21 in Eingriff stehen. Bei genau zwei Getriebestufen 20, 21 ist die eine eine antriebsseitige Getriebestufe 20, während die andere eine abtriebsseitige Getriebestufe 21 ist. Bei drei oder mehr Getriebestufen 20, 21 sind zwischen der antriebsseitigen und der abtriebsseitigen Getriebestufe zumindest eine oder mehrere Zwischenstufen angeordnet. Bei der antriebsseitigen Getriebestufe 20 ist das Sonnenrad 22 drehfest mit der Antriebswelle 18 verbunden. Im Unterschied dazu ist bei der abtriebsseitigen Getriebestufe 21 der Planetenradträger 25 mit der Abtriebswelle 10 drehfest verbunden. Dabei ist zwischen der Abtriebswelle 10 und dem jeweiligen Planetenradträger 25 ein axialer Eingriff vorgesehen, der auf einem möglichst großen Durchmesser erfolgt, um möglichst große Drehmomente übertragen zu können. Dieser Drehmoment übertragende Eingriff kann beispielsweise als Steckverbindung ausgestaltet sein.

Bei der hier vorgestellten bevorzugten Ausführungsform sind die Planetenräder 24 der Getriebestufen 20, 21 Gleichteile. Außerdem sind die Planetenradträger 25 als Gleichteile ausgestaltet. Im Beispiel ist der jeweilige Planetenradträger 25 drehfest mit dem Sonnenrad 23 der jeweils nachfolgenden Getriebestufe verbunden. Dies wird bevorzugt dadurch realisiert, dass das jeweilige Sonnenrad 23 der Folgestufe integral mit dem Planetenradträger 25 der vorausgehenden Stufe hergestellt ist. Da die Planetenradträger 25 hier Gleichteile sind, wird auch der Planetenradträger 25 der abtriebsseitigen Getriebestufe 21 mit einem derartigen Sonnenrad 23 versehen, obwohl er an sich kein derartiges Sonnenrad 23 benötigt, da die Drehmomentübertragung zur Abtriebswelle 10 zweckmäßig nicht über dieses zusätzliche Sonnenrad 23, sondern auf andere Weise erfolgt, nämlich bevorzugt auf einem größeren Durchmesser unmittelbar über den Planetenradträger 25.

Das Sonnenrad 22 der eingangsseitigen Getriebestufe 20 ist drehfest mit der Antriebswelle 18 verbunden und ist daher insbesondere kein Gleichteil zu den Sonnenrädern 23 der Planetenradträger 25. Im Unterschied dazu können die Sonnenräder 23 der auf die eingangsseitige Getriebestufe 20 folgenden Getriebestufen wieder als Gleichteile ausgestaltet sein. Ebenso ist es möglich, alle Sonneräder 22, 23 als Gleichteile auszugestalten, wenn sie separat von den Planetenradträgern 25 hergestellt werden und im Rahmen der Montage auf geeignete Weise drehfest mit der Antriebswelle 18 bzw. mit dem jeweiligen Planetenradträger 25 verbunden werden.

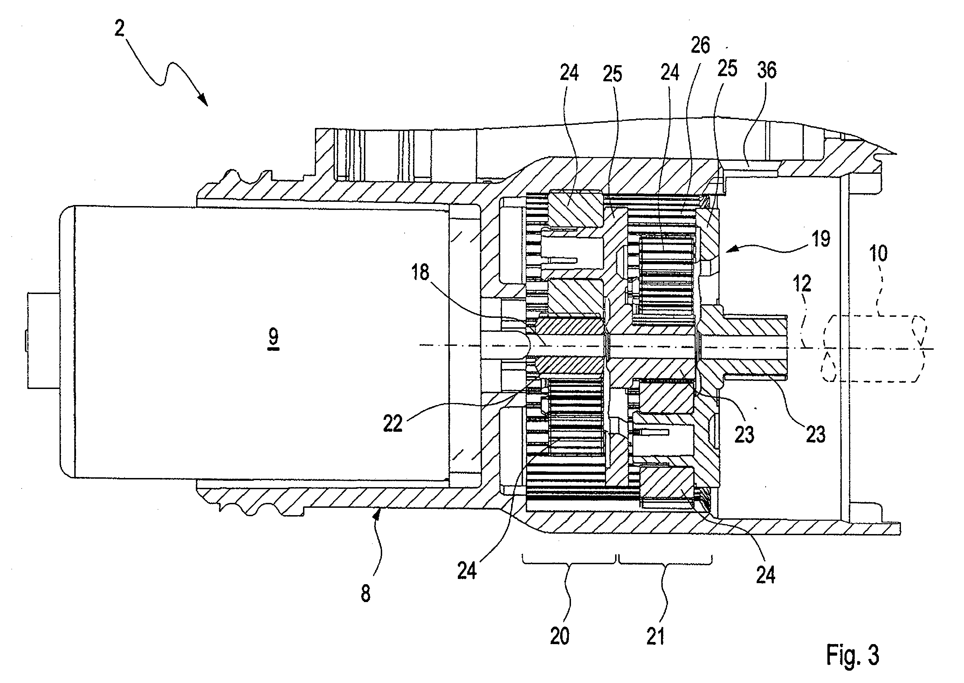

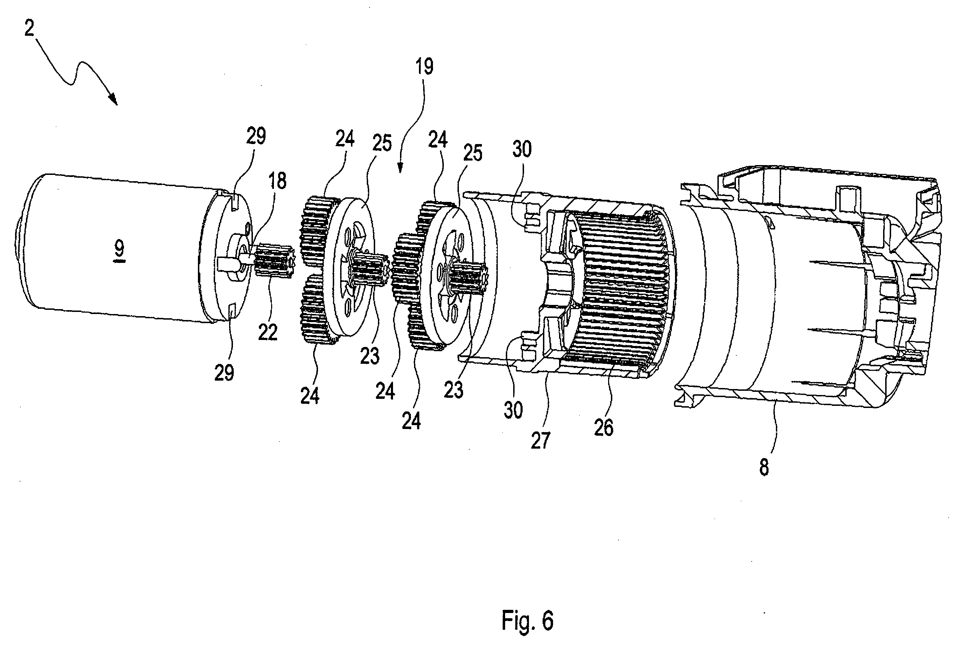

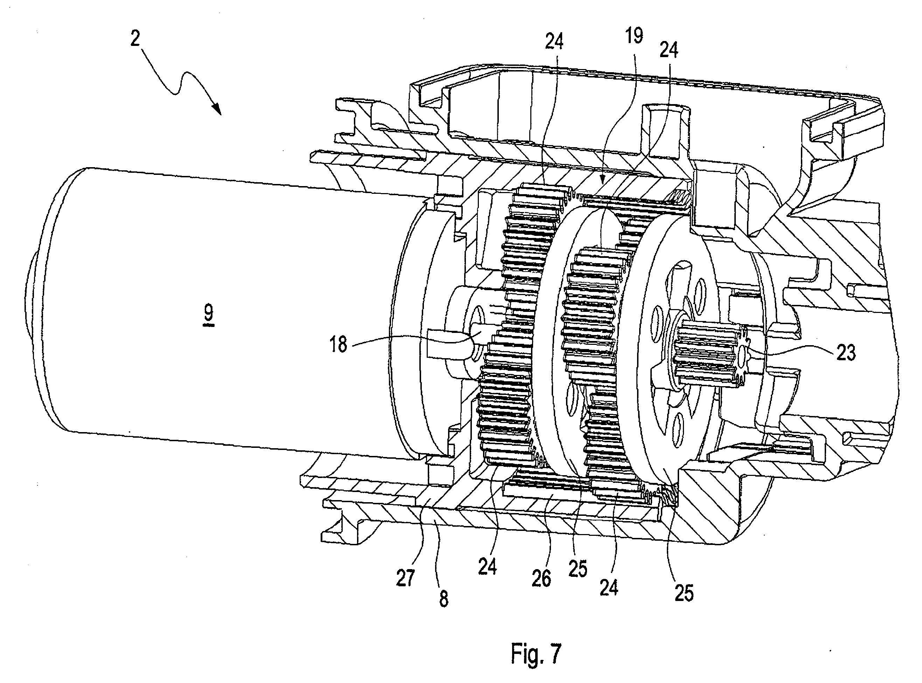

Bei den Ausführungsformen der Fig. 3 bis 5 bildet das Hohlrad 26 einen integralen Bestandteil des Gehäuses 8, das zur Aufnahme des Elektromotors 9 dient. Im Unterschied dazu zeigen die Fig. 6 und 7 eine Ausführungsform, bei welcher das Hohlrad 26 in einem Einsatzteil 27 ausgebildet ist, das bezüglich des übrigen Gehäuses 8 ein separates Bauteil bildet. Durch die Verwendung eines derartigen Einsatzteils 27 kann die Vormontierbarkeit des Planetengetriebes 19 verbessert werden.

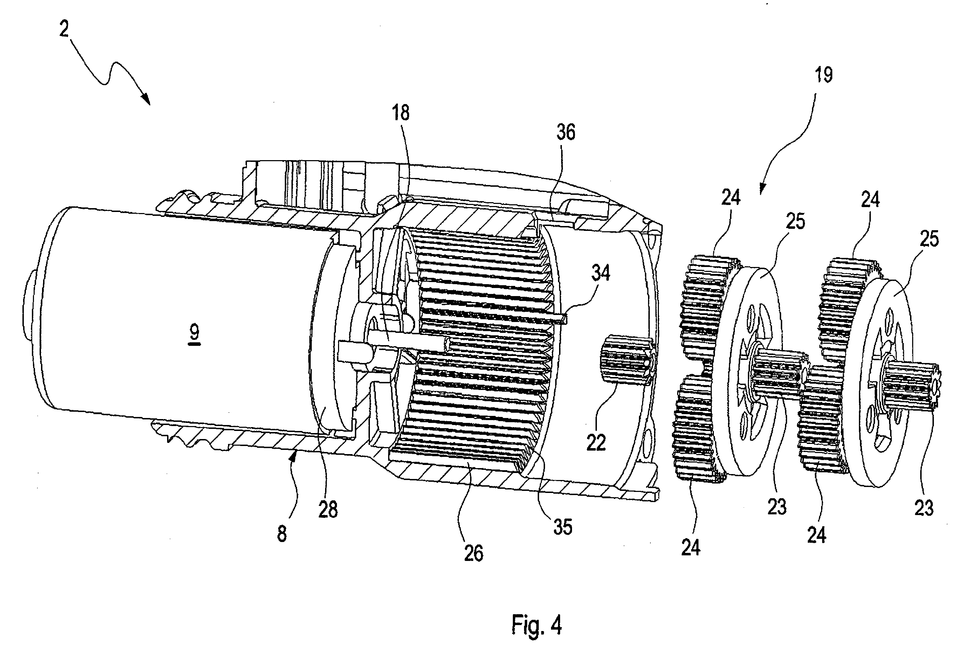

Der Elektromotor 9 besitzt entsprechend den Fig. 4 bis 7 an seinem dem Planetengetriebe 19 zugewandten vorderen Ende 28 zumindest eine, hier zwei Aussparungen 29. Im eingebauten Zustand greifen in diese Aussparungen 29 komplementäre Stege 30 axial ein. Diese Stege 30 sind integrale Bestandteile des Gehäuses 8 bzw. des Einsatzteils 27. Hierdurch wird im Einbauzustand eine Drehmomentabstützung zwischen dem Elektromotor 9 und dem Gehäuse 8 bzw. dem Einsatzteil 27 realisiert.

Das Gehäuse 8 nimmt den Elektromotor 9 und das Planetengetriebe 19 auf bzw. das Einsatzteil 27. Gemäß Fig. 1 ist die Abtriebswelle 10 aus dem Gehäuse 8 herausgeführt und außerhalb des Gehäuses 8 drehfest mit einem Antriebsglied verbunden, das im gezeigten Beispiel durch das erste Kegelrad 15 gebildet ist. Grundsätzlich kann es sich bei dem mit der Antriebswelle 10 antreibbaren Antriebsglied um ein beliebiges Antriebsglied handeln, wie z.B. ein Ritzel oder ein Hebel oder ein Zahnrad oder ein Kupplungselement oder eine Kupplung zur direkten Drehmomentübertragung oder eine beliebige Kombination der vorstehend genannten Antriebsglieder.

Entsprechend Fig. 2 kann eine der Wellen des Aktuators 2 innerhalb des Gehäuses 8 mit einem Signalgeber 31 ausgestattet sein. Im Beispiel ist die Abtriebswelle 10 drehfest mit dem Signalgeber 31 verbunden, so dass eine Rotation der Abtriebswelle 10 mit einer Rotation des Signalgebers 31 einhergeht. Des Weiteren enthält das Gehäuse 8 einen Drehwinkelsensor 32, der so ausgestaltet ist, dass er mit dem Signalgeber 31 berührungslos zusammenwirkt. Insbesondere handelt es sich beim Drehwinkelsensor 32 um einen Hallsensor, der im Folgenden ebenfalls mit 32 bezeichnet wird. Der Hallsensor 32 detektiert Änderungen eines magnetischen Feldes. Zweckmäßig wird als Signalgeber 31 daher ein Permanentmagnet verwendet, der im Folgenden ebenfalls mit 31 bezeichnet wird. Der Permanentmagnet 31 ist drehfest mit der Abtriebswelle 10 verbunden und dabei so polarisiert, dass eine Drehbewegung die Abtriebswelle 10 das magnetische Feld im Bereich des Hallsensors 32 verändert. Hierdurch kann der Hallsensor 32 die Rotation der Abtriebswelle 10 detektieren.

Um die Genauigkeit des Drehwinkelsensors 32 bzw. die winkelmäßige Auflösung des Drehwinkelsensors 32 zu verbessern, sind hier zwei Leitelemente 33 vorgesehen. Diese sind so ausgestaltet, dass sie ein magnetisches Feld des Permanentmagneten 31 zumindest teilweise zum Hallsensor 32 umleiten. Beispielsweise können derartige Leitelemente 33 durch Metallblech gebildet sein. Die Leitelemente 33 erstrecken sich ausgehend vom Hallsensor 32 radial beabstandet zum Permanentmagneten 31 und bezogen auf die Rotationsachse 12 der Abtriebswelle 10 in Umfangsrichtung. Beispielsweise erstreckt sich jedes Leitelement 33 um etwa 90°, so dass sie zusammen den Permanentmagneten 31 etwa um 180° umgreifen.

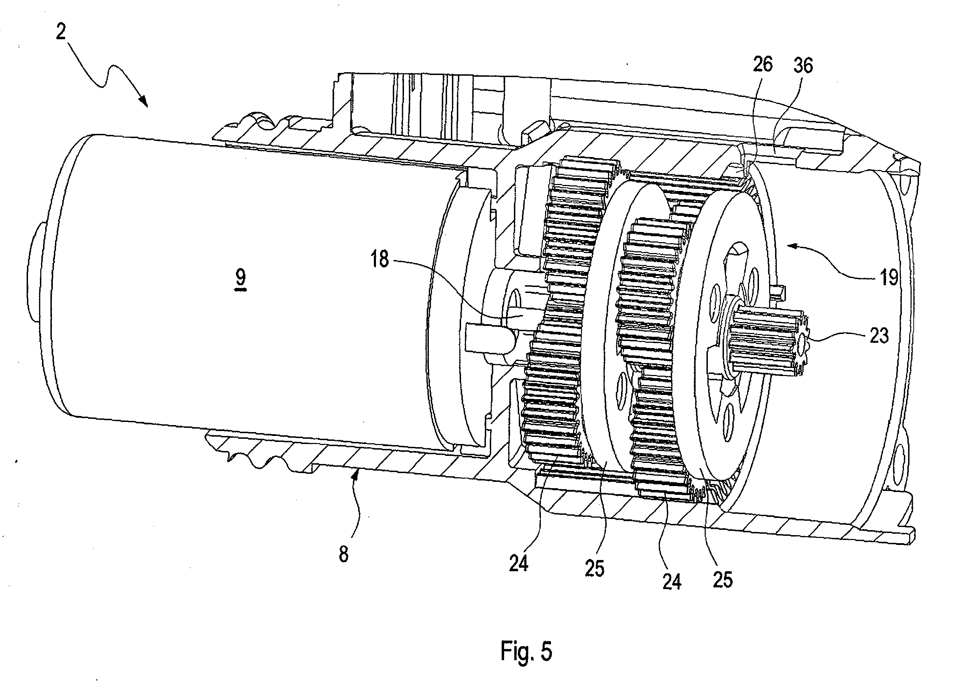

Zur axialen Positionierung der Leitelemente 33 kann es gemäß Fig. 4 und 5 vorgesehen sein, einzelne Zähne 34 einer Verzahnung 35 des Hohlrades 26 axial an einer vom Elektromotor 9 abgewandten Seite zu verlängern. An diesem axial verlängerten Zahn 34 kann das jeweilige Leitelement 33 axial zur Anlage kommen, wodurch es im Gehäuse 8 stabil positioniert ist. Das Gehäuse 8 enthält außerdem im Bereich des Hallsensors 32 eine Durchgangsöffnung 36, durch die der Hallsensor 32 in das Innere des Gehäuses 8 hineinragen kann und durch die der Hallsensor 32 mit einer hier nicht näher dargestellten bzw. nicht näher bezeichneten Auswerteschaltung gekoppelt ist.

Entsprechend Fig. 2 kann außerdem vorgesehen sein, innerhalb des Gehäuses 8 eine Rückstellfeder 67 anzuordnen, die sich einerseits am Gehäuse 8 und andererseits an einer der Wellen, bevorzugt an der Abtriebswelle 10 abstützt. Durch die Rückstellfeder 67 kann der Aktuator 2 bzw. seine Abtriebswelle 10 in eine Endstellung oder in eine zwischen zwei Endstellungen liegende Ausgangsstellung oder Neutralstellung vorgespannt sein. Hierdurch kann insbesondere eine Notlauffunktion für die jeweilige Stelleinrichtung 1 realisiert werden, falls es zu einem Stromausfall kommt und der Elektromotor 9 nicht mehr angesteuert werden kann.

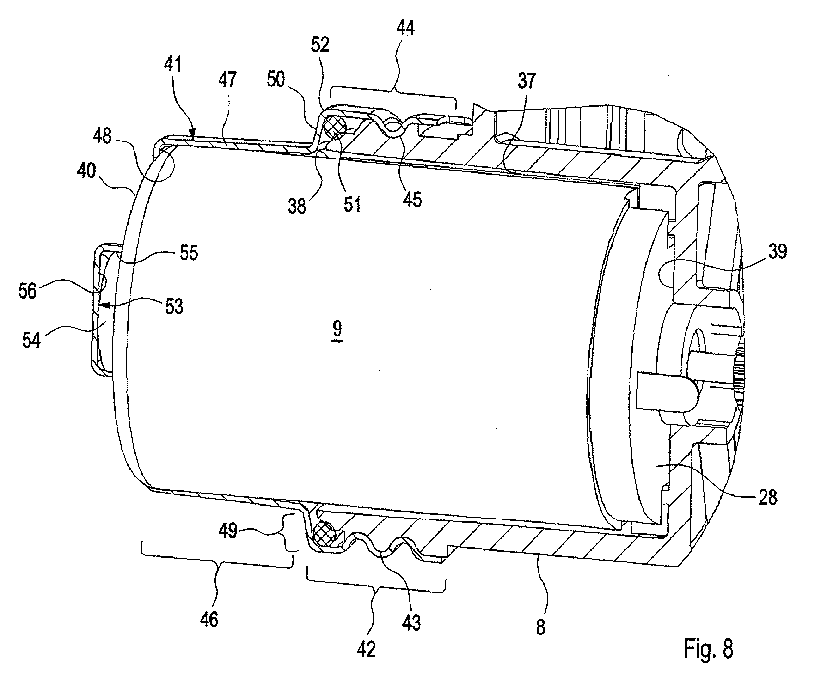

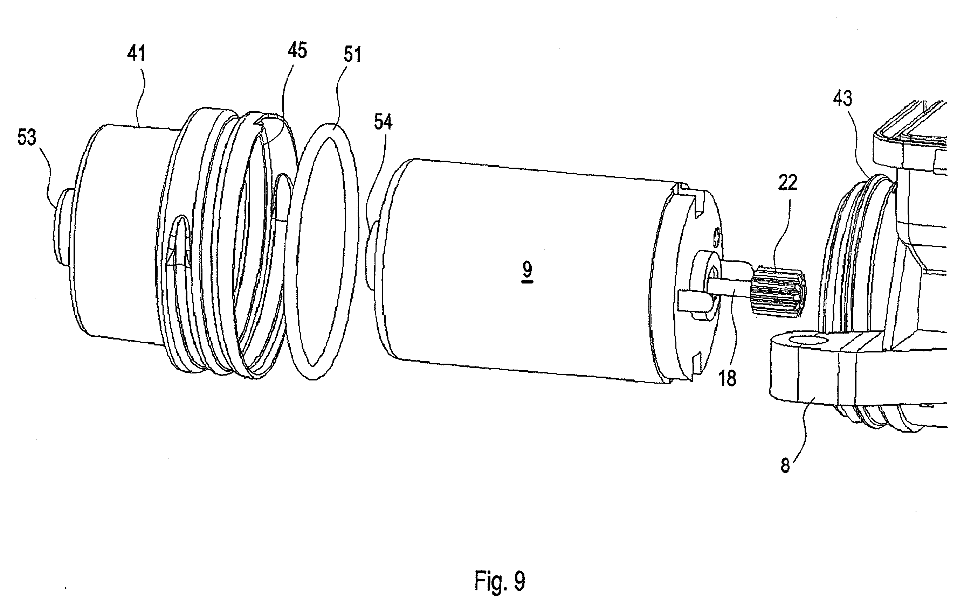

Entsprechend den Fig. 8 und 9 ist zur Unterbringung des Elektromotors 9 im Gehäuse 8 ein Motoraufnahmeraum 37 ausgebildet, der zweckmäßig zylindrisch gestaltet ist und in den der Elektromotor 9 durch eine Einführöffnung 38 bezüglich seiner Antriebswelle 18 axial, also koaxial zur Rotationsachse 12 der Abtriebswelle 10 einführbar ist. Dabei kommt der Elektromotor 9 bei der in Fig. 8 gezeigten Einbaulage an seinem vorderen Ende 28 an einem Boden 39 des Motoraufnahmeraums 37 axial zur Anlage. Im Unterschied dazu ragt der Elektromotor 9 an seinem vom Planetengetriebe 19 entfernten oder abgewandten hinteren Ende 40 axial aus der Einführöffnung 38 heraus. Zum Verschließen der Einführöffnung 38 und zum Positionieren des Elektromotors 9 im Gehäuse 8 ist ein Deckel 41 vorgesehen, der an das Gehäuse 8 anschraubbar ist. An diesem Deckel 41 kommt der Elektromotor 9 mit seinem hinteren Ende 40 axial zur Anlage.

Das Gehäuse 8 weist hierzu in einem Einführabschnitt 42, der die Einführöffnung 38 aufweist, ein Außengewinde 43 auf. Komplementär dazu weist der Deckel 41 einen Gewindeabschnitt 44 auf, der mit einem entsprechenden Innengewinde 45 versehen ist. Des Weiteren weist der Deckel 41 einen Topfabschnitt 46 auf, der eine zylindrische Wand 47 und einen Boden 48 besitzt. An diesem Boden 48 kommt das hintere Ende 40 des Elektromotors 9 im montierten Zustand axial zur Anlage.

Der Deckel 41 besitzt außerdem zwischen dem Topfabschnitt 46 und dem Gewindeabschnitt 44 einen Übergangsabschnitt 49. Dieser ist als axiale Zugfeder ausgestaltet und ermöglicht eine axiale Vorspannung des Elektromotors 9 gegen den Boden 39 des Motoraufnahmeraums 37.

In der gezeigten, bevorzugten Ausführungsform weist der Übergangsabschnitt 49 einen ringförmigen Kragen 50 auf. Dieser ist radial einerseits, hier radial innen mit dem Topfabschnitt 47 und radial andererseits, hier radial außen mit dem Gewindeabschnitt 44 fest verbunden. Insbesondere ist der gesamte Deckel 41 aus einem Stück hergestellt, das integral die einzelnen Abschnitte, also den Topfabschnitt 46, den Gewindeabschnitt 44 und den Übergangsabschnitt 50 aufweist. Beispielsweise handelt es sich beim Deckel 41 um ein Blechformteil oder um ein Kunststoffspritzformteil.

Der Übergangsabschnitt 50 bewirkt eine axiale Positionierung des Topfabschnitts 46 relativ zum Gewindeabschnitt 44. Ferner ist der Übergangsabschnitt 50 so ausgestaltet, dass ein axialer Abstand des Gewindeabschnitts 44 vom Boden 48 des Topfabschnitts 46 gegen eine Rückstellkraft des Übergangsabschnitts 49 vergrößert werden kann. Der Übergangsabschnitt 49 wirkt dabei wie eine Feder.

Zweckmäßig sind nun Deckel 41, Gehäuse 8 und Elektromotor 9 so aufeinander abgestimmt, dass sich die Zugfeder, die durch den Übergangsabschnitt 49 gebildet ist, beim Aufschrauben des Deckels 41 spannt und dadurch die erwünschte axiale Vorspannung des Elektromotors 9 gegen den Boden 39 im Motoraufnahmeraum 37 erzeugt. Bei aufgeschraubtem Deckel 41 ist der Elektromotor 9 dann zwischen den Böden 39 und 48 eingespannt.

Im gezeigten Beispiel ist im Bereich der Einführöffnung 38 eine Dichtung 51 zwischen dem Einführabschnitt 42 und dem Deckel 41 angeordnet. Besonders zweckmäßig ist dabei die hier gezeigte Ausführungsform, bei welcher sich die Dichtung 51 an einem Übergang 52 zwischen dem Übergangsabschnitt 49 und dem Gewindeabschnitt 44 befindet. Beim Festschrauben des Deckels 41 wird die Dichtung 51 komprimiert, wodurch die gewünschte Dichtigkeit realisierbar ist.

Bei den gezeigten Ausführungsformen besitzt der Boden 48 des Topfabschnitts 46 eine Mulde 53. Diese ist bezüglich des Deckels 41 zentral angeordnet und topfförmig ausgestaltet. In diese Mulde 53 ragt ein zylindrischer Vorsprung 54 des Elektromotors 9 hinein. Besagter Vorsprung 54 geht vom hinteren Ende 40 des Elektromotors 9 axial ab. Besagter Vorsprung 54 kann beispielsweise ein hier nicht näher dargestelltes Lager für die Antriebswelle 18 des Elektromotors 9 aufweisen. Zweckmäßig sind der Vorsprung 54 und die Mulde 53 hinsichtlich ihrer Dimensionierung so aufeinander abgestimmt, dass zum einen eine radiale Abstützung des Vorsprungs 54 an einer Wand 55 der Mulde 53 erfolgt. Zum anderen ist der Vorsprung 54 in axialer Richtung von einem Boden 56 der Mulde 53 beabstandet. Dementsprechend realisiert die Mulde 53 lediglich eine Zentrierung des Vorsprungs 54 bezüglich der Rotationsachse der Antriebswelle 18. Die axiale Verspannung des Elektromotors 9 erfolgt dagegen außerhalb der Mulde 53 über den Boden 48 des Deckels 41.

Während der Deckel 41 beispielsweise aus einem Metall hergestellt ist, besteht das Gehäuse 8 im Übrigen bevorzugt aus einem Kunststoff. Durch den federelastischen Übergangsabschnitt 49 können thermisch bedingte Dehnungen, die innerhalb des Gehäuses 8, des Deckels 41 und des Elektromotors 9 zu unterschiedlichen Längenänderungen führen können, federelastisch aufgenommen werden.

Zudem übernimmt hier der Deckel 41 im montierten Zustand auch die Funktion eines Kühlblechs für den Elektromotor 9, um die Verlustenergie des Elektromotors 9 an die umgebende Atmosphäre abzugeben. Hierbei wird die Wärme des Elektromotors 9 über die Fläche seines hinteren Endes 40 an die Fläche des Bodens 48 des Deckels 41 übertragen, der z.B. aus Metallblech hergestellt ist. Die Wärme kann somit an die umgebende Atmosphäre abgegeben werden, wodurch der Elektromotor 9 gekühlt wird.

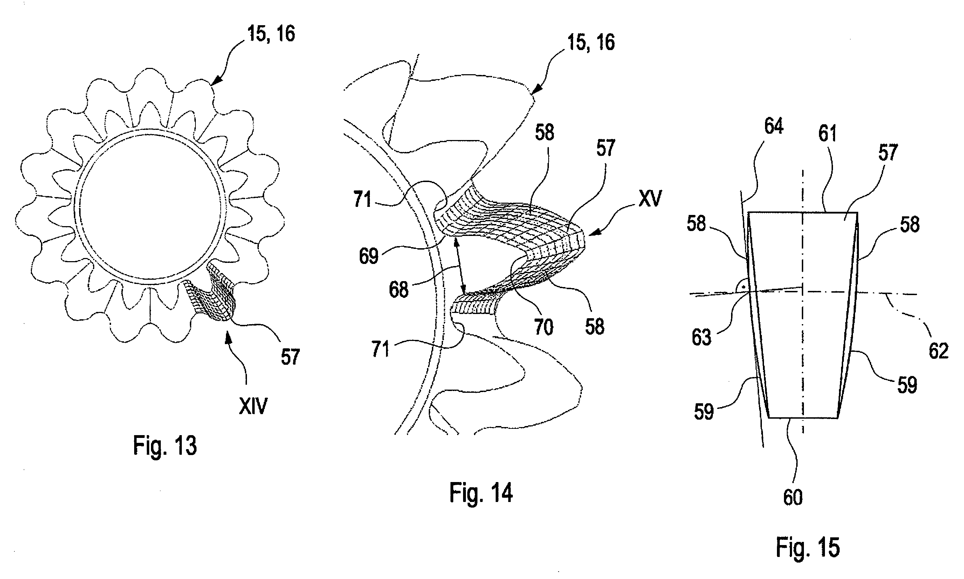

Entsprechend den Fig. 10 bis 15 besitzen die Kegelräder 15, 16 des Kegelgetriebes 11 eine besondere Zahnform und/oder Verzahnung. Fig. 15 zeigt dabei einen einzelnen Zahn 57 eines der Kegelräder 15, 16. Erkennbar besitzt dieser Zahn 57 in seinem radialen Verlauf eine nach außen gewölbte oder konvexe Zahnflanke 58. Die Zahnflanke 58 besitzt somit eine Wölbung 59, die von einem axialen Ende 60 zum anderen axialen Ende 61 des jeweiligen Zahns 57 zunächst zunimmt und wieder abnimmt.

In Fig. 15 ist ein Segment eines Teilkreises 62 des jeweiligen Kegelrads 15, 16 eingetragen. Erkennbar ist die Wölbung 59 der Zahnflanken 58 bei einer bevorzugten Ausführungsform so gestaltet, dass besagter Teilkreis 62 in einem Schnittpunkt 63 mit der Zahnflanke 58 senkrecht auf einer Tangente 64 steht, die im Schnittpunkt 63 an der Zahnflanke 58 anliegt.

Die hier vorgeschlagene gewölbte oder konvexe Zahnflankengeometrie der Kegelräder 15 führt zu einer punktförmigen Kontaktierung im Eingriffsbereich 17 über die Zahnflanken 58. Die gewählte Formgebung für die Zahnflanken 58 kann Lageabweichungen zwischen den Rotationsachsen 12 und 13 der Abtriebswelle 10 und der Betätigungswelle 7 ausgleichen. Zum Beispiel sind die Kegelräder 15, 16 für einen Winkel 14 zwischen den Rotationsachsen 12, 13 ausgelegt, der beispielsweise 90° beträgt. Die Auslegung der Kegelräder 15, 16 definiert dabei einen Sollzustand. Aufgrund von Montagetoleranzen ergibt sich jedoch nach dem Zusammenbau des Aktuators 2 bzw. die Stelleinrichtung 1 eine Ist-Situation, die von der Soll-Vorgabe in der Regel abweicht. So können die Rotationsachsen 12, 13 der Abtriebswelle 10 und der Betätigungswelle 7 im montierten Zustand einen von 90° abweichenden Winkel 14 einschließen. Des Weiteren ist es durchaus möglich, dass sich die beiden Rotationsachsen 12, 13 nicht schneiden, was ebenfalls zu einer Lageabweichung der mit den Wellen 10, 7 fest verbundenen Kegelrädern 15, 16 führt. In Fig. 11 sind exemplarisch mit strichpunktierten Linien Lageabweichungen der einen Rotationsachse 12, 13 dargestellt, die von der hier vorgeschlagenen Verzahnung des Kegelgetriebes 11 noch tolerierbar sind. Die eine Linie 65 definiert beispielsweise eine Soll-Orientierung der einen Rotationsachse, während die andere Linie 66 eine noch tolerierbare Ist-Orientierung der jeweiligen Rotationsachse repräsentiert. Erkennbar ist außerdem, dass auch eine gewisse Exzentrizität zwischen den beiden Rotationsachsen 12, 13 tolerierbar ist.

Zusätzlich reicht es aus, eines der beiden Kegelräder 15, 16 in der beschriebenen Weise zu verzahnen. Bevorzugt werden jedoch beide Kegelräder 15, 16 mit der beschriebenen Verzahnung ausgestattet. Bevorzugt ist eine Ausführungsform, bei welcher beide Kegelräder 15, 16 als Gleichteile ausgestaltet sind. Die Kegelräder 15, 16 können insbesondere aus Kunststoff hergestellt sein, wobei eine Spritzformung bevorzugt ist.

Gemäß Fig. 14 herrscht am jeweiligen Zahn 57 in Umfangsrichtung zwischen den beiden voneinander abgewandten Zahnflanken 58 des jeweiligen Zahns 57 ein Abstand 68. Entsprechend der hier gezeigten bevorzugten Ausführungsform können die Zähne 57 zumindest eines der Kegelräder 15, 16 so profiliert sein, dass besagter Abstand 68 von einem Fußbereich 69 des jeweiligen Zahns 57 bis zu einer Spitze 70 des jeweiligen Zahns 57 nicht zunimmt, also nur abnehmende Bereiche und/oder konstante Bereiche aufweist. Im Beispiel bleibt der Abstand 68 in einem and den Fußbereich 69 anschließenden Bereich zunächst im Wesentlichen gleich, also konstant, während er in einem daran anschließenden Bereich bis zur Spitze 70 nur noch abnimmt. Besonders vorteilhaft lässt sich dadurch gezielt eine Ausgestaltung realisieren, bei welcher die Zähne 57 zumindest eines der Kegelräder 15, 16 im Profil von ihrem Fußbereich 69 bis zu ihrer Spitze 70 hinterschnittfrei geformt sind.

Im gezeigten Beispiel ist optional ferner vorgesehen, die Zähne 57 zumindest eines der Kegelräder 15, 16 so zu profilieren, dass der Fußbereich 69 zwischen zwei in Umfangsrichtung benachbarten Zähnen 57 eine Kreisbogenkontur 71 besitzt. Diese Kreisbogenkontur 71 kann sich exemplarisch über einen Bogenwinkel von maximal 180° erstrecken.

Die vorstehenden Maßnahmen können alternativ oder kumulativ dazu beitragen, das jeweilige Kegelrad 15, 16 als endgeformtes Spritzgussteil zu konzipieren.

Insbesondere können die Kegelräder 15, 16 dabei auch werkzeugfallend konzipiert sein, so dass sie fertig bzw. endgeformt aus einem Spritzformwerkzeug kommen bzw. "fallen". Durch die endgeformten Spritzgussteile entfällt eine Nachbearbeitung, wodurch die Herstellung der Kegelräder 15, 16 sehr preiswert realisierbar ist.

## Patentansprüche

1. Stelleinrichtung, insbesondere eines Kraftfahrzeugs,
- mit einem Aktuator (2), der einen Elektromotor (9) zum drehenden Antreiben einer Abtriebswelle (10) des Aktuators (2) aufweist,
- mit einer drehend antreibbaren Betätigungswelle (7) zum Betätigen wenigstens eines Stellglieds (4) der Stelleinrichtung (1),
- mit einem Kegelgetriebe (11) zur Drehmomentübertragung zwischen der Abtriebswelle (10) und der Betätigungswelle (7),
- wobei ein erstes Kegelrad (15) des Kegelgetriebes (11) drehfest mit der Abtriebswelle (10) verbunden ist und koaxial zur Rotationsachse (12) der Abtriebswelle (10) angeordnet ist,
- wobei ein zweites Kegelrad (16) des Kegelgetriebes (11) drehfest mit der Betätigungswelle (7) verbunden ist und koaxial zur Rotationsachse (13) der Betätigungswelle (7) angeordnet ist,
- wobei die beiden Kegelräder (15, 16) miteinander zur Drehmomentübertragung in Eingriff stehen,
- wobei die Rotationsachsen (12, 13) der Abtriebswelle (10) und der Betätigungswelle (7) einen Winkel (14) von einschließlich 60° bis einschließlich 120° einschließen, **dadurch gekennzeichnet, dass** das jeweilige Kegelrad (15, 16) aus Kunststoff spritzgeformt ist,
- wobei Zähne (57) der Kegelräder (15, 16) so profiliert sind, dass sie von einem Fußbereich (69) des jeweiligen Zahns (57) bis zu einer Spitze (70) des jeweiligen Zahns (57) hinterschnittfrei geformt sind,
- wobei die Kegelräder (15, 16) als endgeformte, insbesondere werkzeugfallende, Spritzgussteile konzipiert sind,
- wobei zumindest eines der Kegelräder (15, 16) nach außen gewölbte oder konvexe Zahnflanken (58) aufweist, derart, dass die jeweilige Zahnflanke (58) eine Wölbung (59) besitzt, die von einem axialen Ende (60) zum anderen axialen Ende (61) des jeweiligen Zahns (57) zunächst zunimmt und dann wieder abnimmt.

2. Stelleinrichtung nach Anspruch 1,
**dadurch gekennzeichnet,**
**dass** die Wölbung (59) der Zahnflanken (58) so gestaltet ist, dass der Teilkreis (62) im Schnittpunkt (63) mit der Zahnflanke (58) senkrecht auf einer Tangente (64) der Zahnflanke (58) durch diesen Schnittpunkt (63) steht.

3. Stelleinrichtung nach Anspruch 1 oder 2,
**dadurch gekennzeichnet,**
**dass** die beiden Kegelräder (15, 16) als Gleichteile ausgestaltet sind.

4. Stelleinrichtung nach einem der Ansprüche 1 bis 3,
**dadurch gekennzeichnet,**
**dass** der Winkel (14) zwischen den Rotationsachsen (12, 13) etwa 90° beträgt.

5. Stelleinrichtung nach einem der Ansprüche 1 bis 4,
**dadurch gekennzeichnet,**
**dass** die Stelleinrichtung (1) eine Klappenstelleinrichtung ist, deren wenigstens ein Stellglied jeweils eine Klappe (4) zum Steuern eines durchströmbaren Querschnitts in einer durchströmbaren Leitung ist.

6. Stelleinrichtung nach Anspruch 5,
**dadurch gekennzeichnet,**
**dass** die jeweilige Klappe (4) eine Tumbleklappe und/oder eine Drallklappe in einem Frischgastrakt einer Brennkraftmaschine des Fahrzeugs oder eine Drosselklappe in einem Frischgastrakt oder in einem Abgastrakt einer Brennkraftmaschine des Fahrzeugs ist.

7. Stelleinrichtung nach einem der Ansprüche 1 bis 6,
**dadurch gekennzeichnet,**
**dass** Zähne (57) der Kegelräder (15, 16) so profiliert sind, dass am jeweiligen Zahn (57) ein Abstand (68) zwischen zwei voneinander abgewandten Zahnflanken (58) von einem Fußbereich (69) des jeweiligen Zahns (57) bis zu einer Spitze (70) des jeweiligen Zahns (57) nicht zunimmt.

8. Stelleinrichtung nach einem der Ansprüche 1 bis 7,
**dadurch gekennzeichnet,**
**dass** Zähne (57) der Kegelräder (15, 16) so profiliert sind, dass ein Fußbereich (69) zwischen zwei benachbarten Zähnen (57) eine Kreisbogenkontur (71) besitzt.

## Claims

1. An actuating device, in particular of a motor vehicle, comprising
- an actuator (2) that has an electric motor (9) for rotatably driving an output shaft (10) of the actuator (2),
- a rotatably drivable actuating shaft (7) for actuating at least one actuating element (4) of the actuating device (1),
- a bevel gear (11) for torque transmission between the output shaft (10) and the actuating shaft (7),
- wherein a first bevel gear wheel (15) of the bevel gear (11) is connected in a rotationally fixed manner to the drive shaft (10) and is arranged coaxial to the rotational axis (12) of the output shaft (10),
- wherein a second bevel gear wheel (16) of the bevel gear (11) is connected in a rotationally fixed manner to the actuating shaft (7) and is arranged coaxial to the rotational axis (13) of the actuating shaft (7),
- wherein the two bevel gear wheels (15, 16) are engaged with each other for torque transmission,
- wherein the rotational axes (12, 13) of the output shaft (10) and the actuating shaft (7) enclose an angle (14) of from 60° inclusive to 120° inclusive, **characterized in that** the respective bevel gear (15, 16) is injection molded from plastic,
- wherein teeth (57) of the bevel gear wheels (15, 16) are profiled in such a manner that they are undercut-free from a base region (69) of the respective tooth (57) to a tip (70) of the respective tooth (57),
- wherein the bevel gear wheels (15, 16) are configured as finish-formed, in particular offtool injection molded parts,
- wherein at least one of the bevel gear wheels (15, 16) has outwardly curved or convex tooth flanks (58), in such a manner that the respective tooth flank (58) has a curvature (59) which first increases from one axial end (60) to the other axial end (61) of the respective tooth (57) and then decreases again.

2. The actuating device according to claim 1,
**characterized in**
**that** the curvature (59) of the tooth flanks (58) are configured such that the pitch circle (62) at the intersection point (63) with the tooth flank (58) is perpendicular to a tangent (64) of the tooth flank (58) through this intersection point (63).

3. The actuating device according to claim 1 or claim 2,
**characterized in**
**that** the two bevel gear wheels (15, 16) are configured as identical parts.

4. The actuating device according to any one of the claims 1 to 3,
**characterized in that** the angle (14) between the rotational axes (12, 13) is approximately 90°.

5. The actuating device according to any one of the claims 1 to 4,
**characterized in that** the actuating device (1) is a flap actuating device, the at least one actuating element of which is in each case a flap (4) for controlling a cross-section through which a flow can pass in a line through which a flow can pass.

6. The actuating device according to claim 5,
**characterized in**
**that** the respective flap (4) is a tumble flap and/or a swirl flap in a fresh gas tract of an internal combustion engine of the vehicle, or a throttle flap in a fresh gas tract or in an exhaust gas tract of an internal combustion engine of the vehicle.

7. The actuating device according to any one of the claims 1 to 6,
**characterized in**
**that** the teeth (57) of the bevel gear wheels (15, 16) are profiled such that at the respective tooth (57), a distance (68) between two tooth flanks (58) facing away from each other does not increase from a base region (69) of the respective tooth (57) to a tip (70) of the respective tooth (57).

8. The actuating device according to any one of the claims 1 to 7,
**characterized in**
**that** teeth (57) of the bevel gear wheels (15, 16) are profiled such that a base region (69) between two adjacent teeth (57) has a circular arc contour (71).

## Revendications

1. Dispositif de réglage, notamment d'un véhicule automobile,
- comportant un actionneur (2), qui présente un moteur électrique (9) pour entraîner rotativement un arbre d'entraînement (10) de l'actionneur (2),
- comportant un arbre d'actionnement (7) entraînable rotativement pour actionner au moins un organe de réglage (4) du dispositif de réglage (1),
- comportant un engrenage conique (11) à des fins de transmission de couple de rotation entre l'arbre de sortie (10) et l'arbre d'actionnement (7),
- dans lequel une première roue conique (15) de l'engrenage conique (11) est reliée de manière solidaire en rotation à l'arbre de sortie (10) et est disposée coaxialement à l'axe de rotation (12) de l'arbre de sortie (10),
- dans lequel une deuxième roue conique (16) de l'engrenage conique (11) est reliée de manière solidaire en rotation à l'arbre d'actionnement (7) et est disposée coaxialement à l'axe de rotation (13) de l'arbre d'actionnement (7),
- dans lequel les deux roues coniques (15,16) viennent en prise l'une avec l'autre à des fins de transmission de couple de rotation,
- dans lequel les axes de rotation (12,13) de l'arbre de sortie (10) et de l'arbre d'actionnement (7) définissent un angle (14) de 60° inclus à 120° inclus, **caractérisé en ce que** la roue conique respective (15,16) est moulé par injection en plastique,
- dans lequel les dents (57) des roues coniques (15,16) sont profilées de telle sorte qu'elles soient formées sans contre-dépouille à partir d'une zone de pied (69) de la dent respective (57) jusqu'à une pointe (70) de la dent (57) respective,
- dans lequel les roues coniques (15,16) sont conçues comme des pièces moulées par injection de forme finale, notamment tombant de l'outil,
- dans lequel au moins une des roues coniques (15,16) présente des flancs de dent (58) bombés ou convexes vers l'extérieur, de telle sorte que le flanc de dent (58) respectif possède un bombé (59), qui augmente d'abord d'une extrémité axiale (60) jusqu'à l'autre extrémité axiale (61) de la dent respective (57) et diminue ensuite à nouveau.

2. Dispositif de réglage selon la revendication 1,
**caractérisé en**
**ce que** le bombé (59) des flancs de dent (58) est configuré de telle sorte que le cercle partiel (62) au point d'intersection (63) avec le flanc de dent (58) se tienne perpendiculairement sur une tangente (64) du flanc de dent (58) à travers ce point d'intersection (63).

3. Dispositif de réglage selon les revendications 1 ou 2,
**caractérisé en**
**ce que** les deux roues coniques (15,16) sont conçues comme des pièces identiques.

4. Dispositif de réglage selon une des revendications 1 à 3,
**caractérisé en**
**ce que** l'angle (14) entre les axes de rotation (12,13) s'élève à environ 90°.

5. Dispositif de réglage selon une des revendications 1 à 4,
**caractérisé en**
**ce que** le dispositif de réglage (1) est un dispositif de réglage à clapet, dont au moins un organe de réglage est respectivement un clapet (4) pour commander une section transversale traversée par un écoulement dans une conduite traversée par un écoulement.

6. Dispositif de réglage selon la revendication 5,
**caractérisé en**
**ce que** le clapet respectif (4) est un clapet Tumble et/ou un clapet à torsion dans un conduit de gaz frais d'un moteur à combustion interne du véhicule ou une vanne papillon dans un conduit de gaz frais ou dans un conduit de gaz d'échappement d'un moteur à combustion interne du véhicule.

7. Dispositif de réglage selon une des revendications 1 à 6,
**caractérisé en**
**ce que** les dents (57) des roues coniques (15,16) sont profilées de telle sorte que sur la dent respective (57) un écart (68) entre deux flancs de dent (58) se détournant l'un de l'autre augmente à partir d'une zone de pied (69) de la dent respective (57) jusqu'à une pointe (70) de la dent respective (57).

8. Dispositif de réglage selon une des revendications 1 à 7,
**caractérisé en**
**ce que** les dents (57) des roues coniques (15,16) sont profilées de telle sorte qu'une zone de pied (69) entre deux dents voisines (57) possède un contour d'arc de cercle (71).
